# EUROPEAN PATENT SPECIFICATION

(11) **EP 3 687 191 B1**
(45) Date of publication and mention of the grant of the patent: **15.05.2024**
(21) Application number: 18858712.5
(22) Date of filing: 21.08.2018
(51) Int. Cl.: G01S 7/521, G01S 15/931, H04R 17/00

(54) **ULTRASONIC SENSOR**
ULTRASCHALLSENSOR
CAPTEUR ULTRASONORE

(30) Priority: 21.09.2017 JP 2017181380
(43) Date of publication of application: 29.07.2020
(73) Proprietor: Murata Manufacturing Co., Ltd., Nagaokakyo-shi, Kyoto 617-8555 (JP)
(72) Inventor: SATO, Takehiro, Nagaokakyo-shi Kyoto 617-8555 (JP)
(74) Representative: Reeve, Nicholas Edward
(86) International application number: PCT/JP2018/030840
(87) International publication number: WO 2019/058842

(56) References cited:
- JP-A- 2001 078 296
- JP-A- 2001 232 294
- JP-A- 2002 112 395
- JP-A- 2002 262 383

## Description

### Technical Field

The present invention relates to an ultrasonic sensor.

### Background Art

The ultrasonic sensor is mounted, for example, on the rear of a vehicle and used as a back sonar. In this case, the ultrasonic sensor transmits ultrasonic waves backward from the vehicle, and then receives the ultrasonic waves reflected and returned from an obstacle behind the vehicle. On the basis of data obtained by electrically processing the relation between the transmitted and received ultrasonic waves, distance information can be determined. As data representing the positional relation of the obstacle relative to the rear of the vehicle, the distance information described above can be used to control the driving of the vehicle. An exemplary ultrasonic sensor that can be used for such purposes is described in Japanese Unexamined Patent Application Publication No. 2002-209294.

A lack of vertical directivity in the ultrasonic sensor may cause erroneous detection of an unwanted object. To improve detection accuracy of the ultrasonic sensor, a further improvement in vertical directivity is required. The appearance or design of the ultrasonic sensor mounted, for example, on a vehicle is also an issue to be discussed.

JP2001-078296 discloses an ultrasonic wave vibrator that can oscillate an ultrasonic wave with an isotropic directivity and which is easy to manufacture. In this ultrasonic wave vibrator, a piezoelectric element is placed on an inner face of an enclosed face of a case body whose one end face is open and the other end face is closed. The ultrasonic wave vibrator generates an ultrasonic wave in the enclosed face with an isotropic directivity. The case body consists of a metallic case formed with a metal- made plate and of a resin case made of a synthetic resin material.

JP2001-232294 discloses an ultrasonic vibrator with improved wave transmission output and improved vibration damping power. The ultrasonic vibrator is provided with piezoelectric elements on the inner face side of a closed face of a case with one end open and the other and closed, and the closed face is formed as a vibration surface. The case is constituted of a resin case formed of a synthetic resin material and a metal case formed of a metal plate. The metal case is constituted of a vibration plate forming the vibration face and a side plate embedded into the resin case or set closed to the face and held thereon. Through-holes are formed on the section embedded or set close to the resin case on the side plate.

We have appreciated that it would be desirable to improve vertical directivity without sacrificing the design of the ultrasonic sensor mounted, for example, on a vehicle.

### SUMMARY OF INVENTION

The invention is defined in the independent claim to which reference is made. In an aspect of the invention, an ultrasonic sensor based on the present invention includes a cylindrical case having a bottom plate, and a piezoelectric vibrating element mounted on the bottom plate inside the case. The case has an internal space that is a recess extending downward toward the bottom plate. When viewed in a direction perpendicular to the bottom plate, the internal space is of a shape that is longer in one direction than in a direction perpendicular to that direction, having a longitudinal direction parallel to the bottom plate. The case includes a first portion and a second portion. The first portion has a cylindrical shape extending from the bottom plate in the direction perpendicular to the bottom plate, and has a first length which is an outside diameter along the longitudinal direction. The second portion is disposed on a side of the first portion remote from the bottom plate, has a cylindrical shape concentric with the first portion, and has a second length which is an outside diameter along the longitudinal direction and is greater than the first length. A maximum length of a part of the internal space inside the second portion along the longitudinal direction is greater than a maximum length of a part of the internal space inside the first portion along the longitudinal direction. The first portion and the second portion meet at a stepped portion, and the vibrating surface of the ultrasonic sensor comprises the bottom plate and a portion comprising part of the outer wall of the first portion, and a part of the stepped portion parallel to the bottom plate.

The present invention makes it possible to improve vertical directivity without sacrificing the design of the ultrasonic sensor mounted, for example, on a vehicle.

### BRIEF DESCRIPTION OF DRAWINGS

Fig. 1 is a first perspective view of an ultrasonic sensor according to a first embodiment based on the present invention.
Fig. 2 is a second perspective view of the ultrasonic sensor according to the first embodiment based on the present invention.
Fig. 3 is a cross-sectional view of the ultrasonic sensor according to the first embodiment based on the present invention.
Fig. 4 is a perspective view of a case included in the ultrasonic sensor according to the first embodiment based on the present invention.
Fig. 5 is a first plan view of the case included in the ultrasonic sensor according to the first embodiment based on the present invention.
Fig. 6 is a second plan view of the case included in the ultrasonic sensor according to the first embodiment based on the present invention.
Fig. 7 is a cross-sectional view as viewed in the direction of arrow VII-VII in Fig. 6.
Fig. 8 is a cross-sectional view as viewed in the direction of arrow VIII-VIII in Fig. 6.
Fig. 9 is an explanatory diagram of a portion serving as a vibrating surface in the ultrasonic sensor according to the first embodiment based on the present invention.
Fig. 10 is a graph showing vertical directivities of a conventional ultrasonic sensor and the ultrasonic sensor according to the first embodiment based on the present invention.
Fig. 11 is an explanatory diagram illustrating how the ultrasonic sensor according to the first embodiment based on the present invention is mounted and used on the rear of a vehicle.
Fig. 12 is a perspective view of an ultrasonic sensor according to a second embodiment based on the present invention.
Fig. 13 is a plan view of a case included in the ultrasonic sensor according to the second embodiment based on the present invention.
Fig. 14 is a cross-sectional view as viewed in the direction of arrow XIV-XIV in Fig. 13.
Fig. 15 is a cross-sectional view as viewed in the direction of arrow XV-XV in Fig. 13.
Fig. 16 is a perspective view of an ultrasonic sensor according to a third embodiment based on the present invention.
Fig. 17 is a plan view of a case included in the ultrasonic sensor according to the third embodiment based on the present invention.
Fig. 18 is a cross-sectional view as viewed in the direction of arrow XVIII-XVIII in Fig. 17.
Fig. 19 is a cross-sectional view as viewed in the direction of arrow XIX-XIX in Fig. 17.
Fig. 20 is a perspective view of an ultrasonic sensor according to a fourth embodiment based on the present invention.
Fig. 21 is a plan view of a case included in the ultrasonic sensor according to the fourth embodiment based on the present invention.
Fig. 22 is a cross-sectional view as viewed in the direction of arrow XXII-XXII in Fig. 21.
Fig. 23 is a cross-sectional view as viewed in the direction of arrow XXIII-XXIII in Fig. 21.
Fig. 24 is a cross-sectional view of an ultrasonic sensor according to a fifth embodiment based on the present invention.

### DESCRIPTION OF EMBODIMENTS

Dimensions in the drawings are not necessarily to scale and may be exaggerated for convenience of explanation. In the following description, the concept of "up" or "down" does not necessarily mean "up" or "down" in an absolute sense, and may mean "up" or "down" in a relative sense in the illustrated position.

### First Embodiment

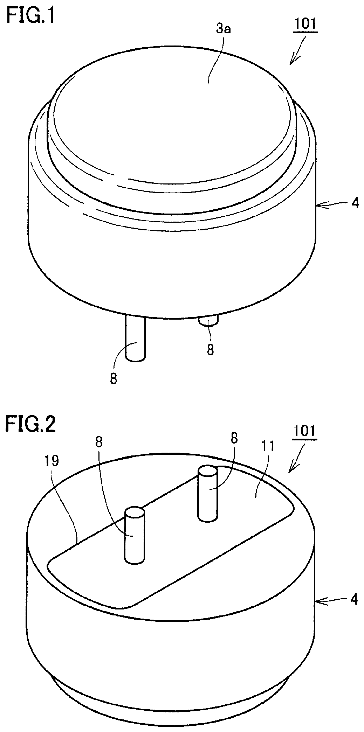

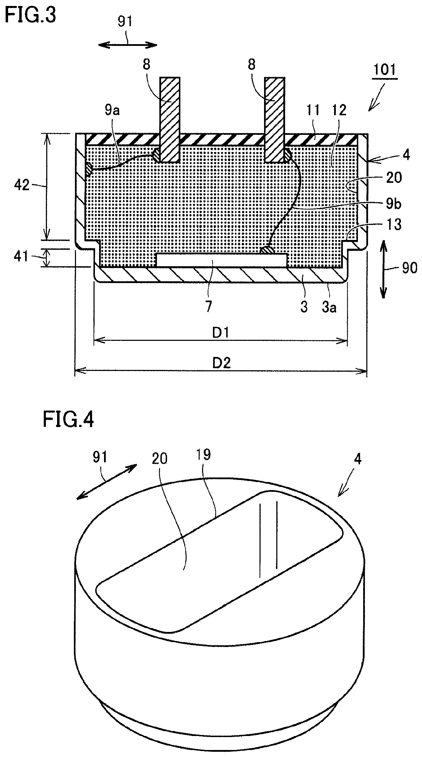

With reference to Fig. 1 to Fig. 8, an ultrasonic sensor according to a first embodiment based on the present invention will be described. Fig. 1 illustrates an outer appearance of an ultrasonic sensor 101 according to the present embodiment. The ultrasonic sensor 101 includes a case 4 and two external terminals 8 protruding from the case 4. The case 4 has a front surface 3a. The front surface 3a is, for example, circular in shape. Fig. 2 illustrates a back side of the ultrasonic sensor 101. The case 4 has an opening 19. The opening 19 is closed by a lid 11. Fig. 3 is a cross-sectional view of the ultrasonic sensor 101. The two external terminals 8 are positioned to protrude out of a filling material 12. The two external terminals 8 each pass through the lid 11. The case 4 is formed, for example, of metal. The case 4 is formed, for example, in an integrated manner. The case 4 has a bottom plate 3, and the front surface 3a visible in Fig. 1 includes the outer surface of the bottom plate 3.

The ultrasonic sensor 101 includes the case 4 cylindrically shaped and having the bottom plate 3, and a piezoelectric vibrating element 7 mounted on the bottom plate 3 inside the case 4. The case 4 has an internal space 20 which is a recess extending downward toward the bottom plate 3. The internal space 20 is filled with the filling material 12. The internal space 20 is closed by the lid 11. The lid 11 is formed of, for example, an insulator. The internal space 20 is filled with the filling material 12. As illustrated in Fig. 3, one of the two external terminals 8 is electrically connected to the case 4 by a lead wire 9a, and the other of the two external terminals 8 is electrically connected to the piezoelectric vibrating element 7 by a lead wire 9b. While not illustrated in detail in Fig. 3, the piezoelectric vibrating element 7 actually includes two electrodes. Of the two electrodes of the piezoelectric vibrating element 7, one is electrically connected to the lead wire 9b, and the other is electrically connected to the bottom plate 3 of the case 4.

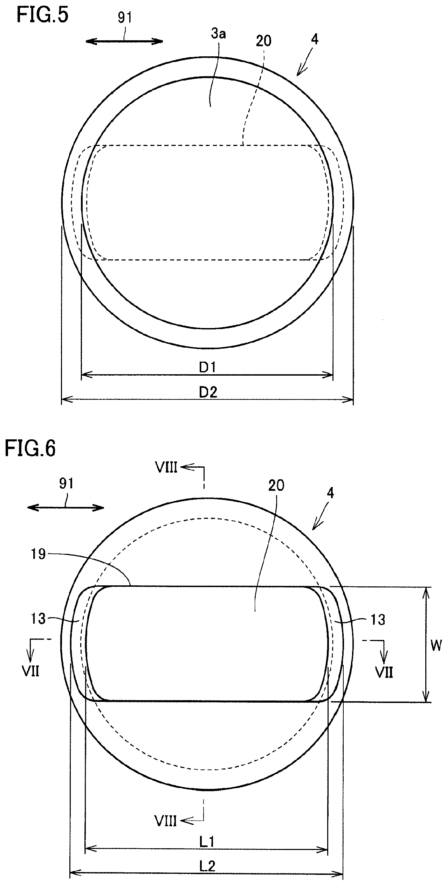

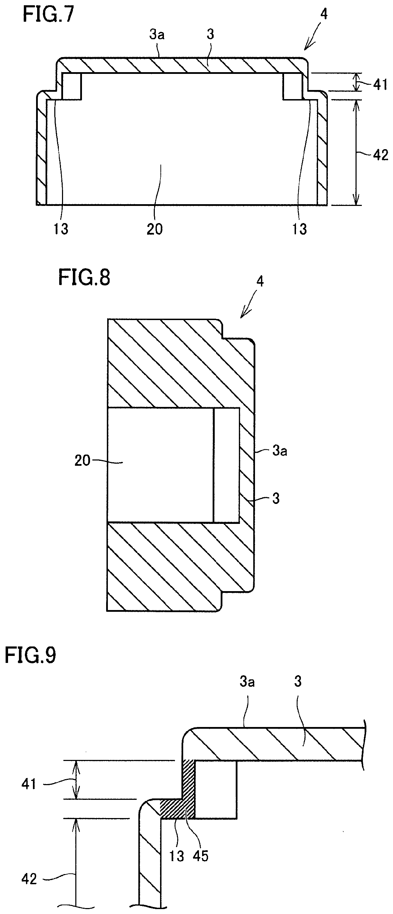

Fig. 4 illustrates the case 4 taken out independently. Fig. 5 illustrates the case 4 as viewed from the front surface 3a. When the case 4 is viewed in a direction 90 perpendicular to the bottom plate 3, the internal space 20 is of a shape having a longitudinal direction 91 parallel to the bottom plate 3. Fig. 6 illustrates the case 4 as viewed from the opening 19. Fig. 7 is a cross-sectional view as viewed in the direction of arrow VII-VII in Fig. 6. Fig. 8 is a cross-sectional view as viewed in the direction of arrow VIII-VIII in Fig. 6.

The case 4 includes a first portion 41 and a second portion 42. The first portion 41 has a cylindrical shape extending from the bottom plate 3 in the direction 90 perpendicular to the bottom plate 3, and has a first length D1 which is an outside diameter along the longitudinal direction 91. The second portion 42 is disposed on a side of the first portion 41 remote from the bottom plate 3, has a cylindrical shape concentric with the first portion 41, and has a second length D2 which is an outside diameter along the longitudinal direction 91 and is greater than the first length D1. As illustrated in Fig. 6, a maximum length L2 of a part of the internal space 20 inside the second portion 42 along the longitudinal direction 91 is greater than a maximum length L1 of a part of the internal space 20 inside the first portion 41 along the longitudinal direction 91.

The bottom plate 3 serves as a vibrating plate. The piezoelectric vibrating element 7 vibrates in response to an electric signal applied to the piezoelectric vibrating element 7. Vibration produced by the piezoelectric vibrating element 7 vibrates the bottom plate 3 and sends out ultrasonic waves from the front surface 3a. Ultrasonic waves coming from outside onto the front surface 3a vibrate the bottom plate 3. By the piezoelectric vibrating element 7, this vibration can be detected as an electric signal.

The present embodiment can improve the vertical directivity provided by the conventional structure. That is, the present embodiment can narrow the angular range which allows high-sensitivity sensing. The reasons for this will be described in detail below.

To improve vertical directivity, L1 is preferably increased as much as possible. In the conventional structure, that is, in the structure where L1 and L2 of the internal space 20 are equal, the vertical directivity is dependent on L1. L1 is a dimension obtained by subtracting a value twice the thickness of the outer wall of the first portion 41 from D1, which is the diameter of the first portion 41 along the longitudinal direction 91. This means that the vertical directivity is dependent on the outer shape of the first portion 41. The outer shape of the first portion 41 cannot be expanded due to limitations associated with, for example, space for installing the ultrasonic sensor. The upper limit of D1 is thus determined. Since the upper limit of L1 is dependent on the upper limit of D1, there has been a limit to the extent to which the vertical directivity of the ultrasonic sensor can be improved.

However, in the present embodiment, where L1 and L2 have different values and L2 is greater than L1, it is possible to increase L2 without changing L1. Therefore, for example, even when D1 is dependent on the space for installing the ultrasonic sensor and this determines the upper limit of L1, it is still possible to increase L2. In the present embodiment, a portion 45 illustrated in Fig. 9 serves as a vibrating surface, along with the bottom plate 3. In Fig. 9, the portion 45 is densely hatched for convenience of explanation. The portion 45 is composed of the outer wall of the first portion 41 and a part of a stepped portion 13 parallel to the bottom plate 3. An imaginary surface surrounded by the outer wall of the second portion 42 and parallel to the bottom plate 3 can be regarded as a pseudo vibrating surface. The maximum internal length of the second portion 42 along the longitudinal direction 91 is L2. The vertical directivity can thus be determined by L2, which is greater than L1. The vertical directivity provided by the conventional structure can thus be improved.

When mounted on, for example, a vehicle, the ultrasonic sensor is typically attached to a bumper, with only the front surface 3a of the bottom plate 3 exposed through a hole in the bumper. Therefore, to discuss the design of the ultrasonic sensor mounted on the vehicle, the diameter of the front surface 3a is taken into account. In the present embodiment, where there is no need to change D1 to increase L2, the diameter of the front surface 3a can be kept unchanged. The present embodiment can thus improve vertical directivity without sacrificing the design of the ultrasonic sensor mounted on the vehicle.

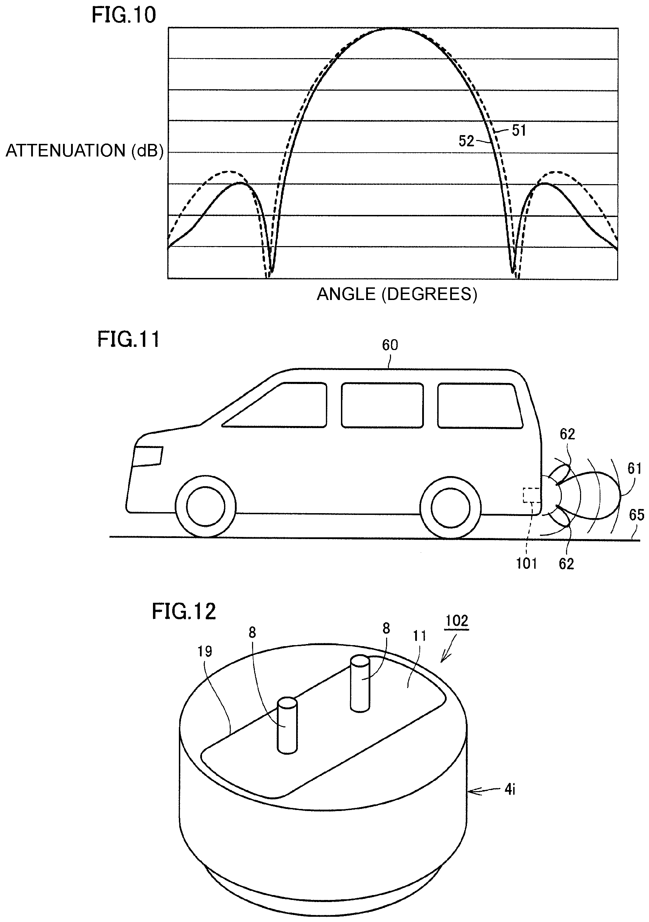

Fig. 10 is a graph that actually compares vertical directivities of an ultrasonic sensor having the conventional structure and the ultrasonic sensor 101 according to the present embodiment. A line 51 represents a vertical directivity obtained by the ultrasonic sensor having the conventional structure. A line 52 represents a vertical directivity obtained by the ultrasonic sensor 101 according to the present embodiment. Fig. 11 illustrates an example of how the ultrasonic sensor 101 is mounted and used on the rear of a vehicle 60. A main lobe 61 and side lobes 62 are shown in Fig. 11. The ultrasonic sensor 101 is expected to appropriately detect an obstacle behind the vehicle 60, but is expected not to detect a ground 65. The main lobe 61 and the side lobes 62 each represent a range where an object can be detected with ultrasonic waves. In Fig. 10, three bumps appear in both the line 51 and the line 52. Of the three bumps in Fig. 10, the bump in the center corresponds to the main lobe 61 and the lower bumps on both sides correspond to the side lobes 62. The narrower the width of the bump corresponding to the main lobe 61, the better. Fig. 10 shows that in the line 52, the width of the bump corresponding to the main lobe 61 is narrower than that in the line 51. This means that the main lobe 61 is narrowed and vertical directivity is improved. To prevent the ultrasonic sensor 101 from erroneously detecting ultrasonic waves reflected, for example, from the ground 65 in Fig. 11, it is preferable that the bumps corresponding to the side lobes 62 be small. In Fig. 10, the lower the bumps corresponding to the side lobes 62, the better. Fig. 10 shows that in the line 52, the bumps corresponding to the side lobes 62 are lower than those in the line 51. This means that with the ultrasonic sensor 101 according to the present embodiment, the side lobes 62 are reduced and vertical directivity is improved.

As described in the present embodiment, the part of the internal space 20 inside the first portion 41 and the part of the internal space 20 inside the second portion 42 preferably form the stepped portions 13 at respective ends of the internal space 20 in the longitudinal direction 91. This configuration enables an abrupt change in the internal shape in the area of transition from the first portion 41 to the second portion 42. This can connect the first portion 41 and the second portion 42 even if there is a significant difference between L1 and L2.

As described in the present embodiment, when viewed in the direction 90 perpendicular to the bottom plate 3, the contour of the internal space 20 is preferably curved along the contour of the case 4 at both ends of the internal space 20 in the longitudinal direction 91. This configuration can expand the vibration of the piezoelectric vibrating element 7 in the longitudinal direction 91, and can narrow the vertical directivity as a result.

Although the present embodiment shows an example where the internal space 20 is entirely filled with the filling material 12 of one type, this is merely an example. The internal space 20 may be filled with two or more types of materials combined together. The internal space 20 is not necessarily required to be entirely filled with the filling material 12, and may be partially filled with the filling material 12.

As described in the present embodiment, the filling material 12 is preferably disposed to fill at least part of the internal space 20. This configuration can protect the piezoelectric vibrating element 7. Depending on how the filling material 12 is disposed, it is possible to reduce or prevent entry of water or dust particles into the area around the piezoelectric vibrating element 7. The filling material 12 may be, for example, silicone.

Although the opening 19 is closed by the lid 11 in the present embodiment, the lid 11 is optional and the ultrasonic sensor may have a structure without the lid 11. Also, the internal space 20 is not necessarily required to be filled with the filling material 12. These conditions are also applicable to the embodiments described below.

### Second Embodiment

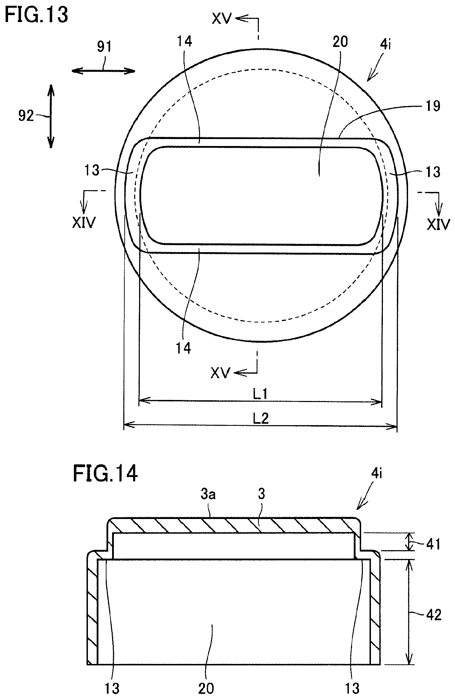

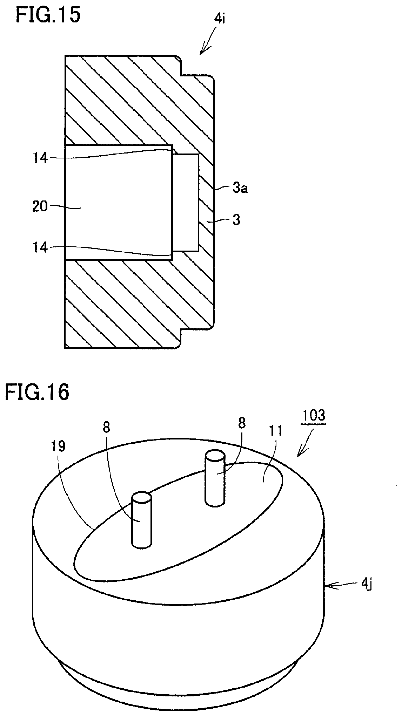

With reference to Fig. 12 to Fig. 15, an ultrasonic sensor according to a second embodiment based on the present invention will be described. Fig. 12 illustrates an outer appearance of an ultrasonic sensor 102 according to the present embodiment. The ultrasonic sensor 102 includes a case 4i and two external terminals 8 protruding from the case 4i. Fig. 13 is a plan view of the case 4i. Fig. 14 is a cross-sectional view as viewed in the direction of arrow XIV-XIV in Fig. 13. Fig. 15 is a cross-sectional view as viewed in the direction of arrow XV-XV in Fig. 13.

Like the case 4 described in the first embodiment, the case 4i is formed, for example, of metal. The same applies to other cases described in the following embodiments. Like the case 4 described in the first embodiment, the case 4i includes the first portion 41 and the second portion 42. As illustrated in Fig. 13, the maximum length L2 of a part of the internal space 20 inside the second portion 42 along the longitudinal direction 91 is greater than the maximum length L1 of a part of the internal space 20 inside the first portion 41 along the longitudinal direction 91. The part of the internal space 20 inside the first portion 41 and the part of the internal space 20 inside the second portion 42 form the stepped portions 13 at respective ends of the internal space 20 in the longitudinal direction 91. When a direction perpendicular to the longitudinal direction 91 is defined as a width direction 92, the part of the internal space 20 inside the first portion 41 and the part of the internal space 20 inside the second portion 42 form stepped portions 14 at respective ends of the internal space 20 in the width direction 92. Two sides of the stepped portions 14 are linear. The two sides of the stepped portions 14 are parallel to the longitudinal direction 91. The stepped portions 13 and the stepped portions 14 may be continuous, as illustrated in Fig. 13.

The present embodiment can achieve advantageous effects similar to those of the first embodiment.

### Third Embodiment

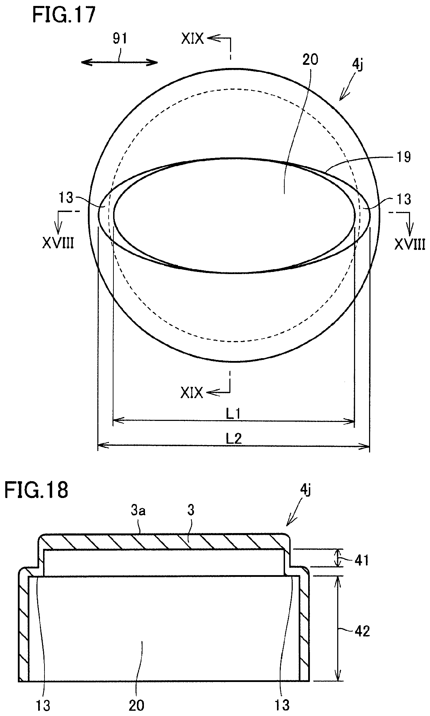

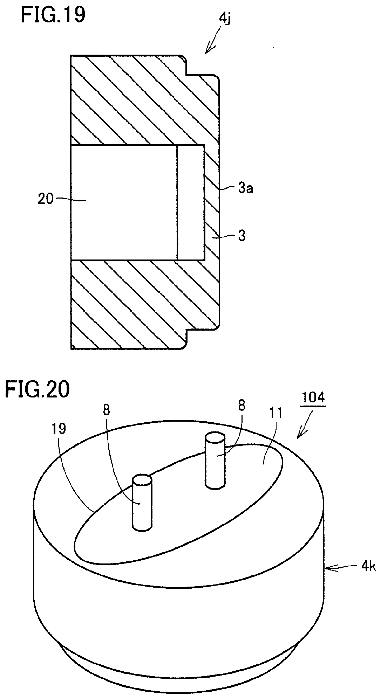

With reference to Fig. 16 to Fig. 19, an ultrasonic sensor according to a third embodiment based on the present invention will be described. Fig. 16 illustrates an outer appearance of an ultrasonic sensor 103 according to the present embodiment. The ultrasonic sensor 103 includes a case 4j and two external terminals 8 protruding from the case 4j. Fig. 17 is a plan view of the case 4j. Fig. 18 is a cross-sectional view as viewed in the direction of arrow XVIII-XVIII in Fig. 17. Fig. 19 is a cross-sectional view as viewed in the direction of arrow XIX-XIX in Fig. 17.

Like the case 4 described in the first embodiment, the case 4j includes the first portion 41 and the second portion 42. As illustrated in Fig. 17, the maximum length L2 of a part of the internal space 20 inside the second portion 42 along the longitudinal direction 91 is greater than the maximum length L1 of a part of the internal space 20 inside the first portion 41 along the longitudinal direction 91. As illustrated in Fig. 17, the internal space 20 is elliptical in shape when viewed in the direction perpendicular to the bottom plate 3. The part of the internal space 20 inside the first portion 41 and the part of the internal space 20 inside the second portion 42 form the stepped portions 13 at respective ends of the internal space 20 in the longitudinal direction 91.

The present embodiment can achieve advantageous effects similar to those of the first embodiment.

### Fourth Embodiment

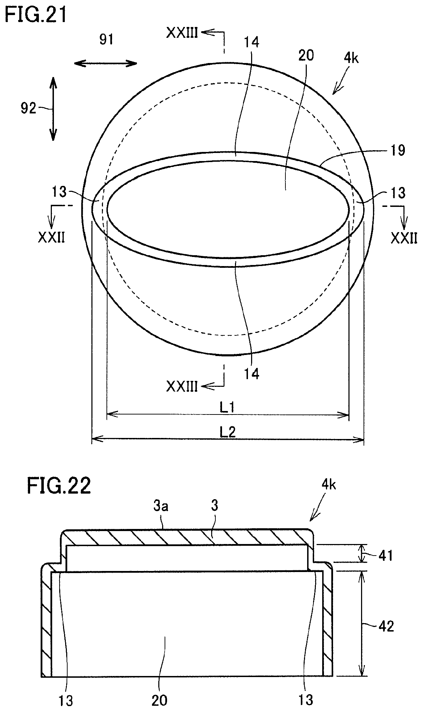

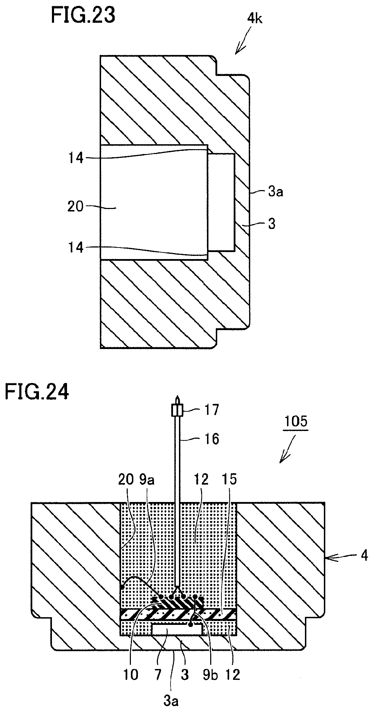

With reference to Fig. 20 to Fig. 23, an ultrasonic sensor according to a fourth embodiment based on the present invention will be described. Fig. 20 illustrates an outer appearance of an ultrasonic sensor 104 according to the present embodiment. The ultrasonic sensor 104 includes a case 4k and two external terminals 8 protruding from the case 4k. Fig. 21 is a plan view of the case 4k. Fig. 22 is a cross-sectional view as viewed in the direction of arrow XXII-XXII in Fig. 21. Fig. 23 is a cross-sectional view as viewed in the direction of arrow XXIII-XXIII in Fig. 21.

Like the case 4 described in the first embodiment, the case 4k includes the first portion 41 and the second portion 42. As illustrated in Fig. 21, the maximum length L2 of a part of the internal space 20 inside the second portion 42 along the longitudinal direction 91 is greater than the maximum length L1 of a part of the internal space 20 inside the first portion 41 along the longitudinal direction 91. As illustrated in Fig. 21, the internal space 20 is elliptical in shape when viewed in the direction perpendicular to the bottom plate 3. The part of the internal space 20 inside the first portion 41 and the part of the internal space 20 inside the second portion 42 form the stepped portions 13 at respective ends of the internal space 20 in the longitudinal direction 91. The part of the internal space 20 inside the first portion 41 and the part of the internal space 20 inside the second portion 42 form the stepped portions 14 at respective ends of the internal space 20 in the width direction 92. The stepped portions 13 and the stepped portions 14 may be continuous, as illustrated in Fig. 21.

The present embodiment can achieve advantageous effects similar to those of the first embodiment.

Of the four configurations of the first to fourth embodiments described above, the configuration of the first embodiment is particularly preferable. That is, as in the first embodiment, when viewed in the direction perpendicular to the bottom plate 3, it is preferable that the internal space 20 have two sides parallel to the longitudinal direction 91, and that between the two sides, the width of the part of the internal space 20 inside the first portion 41 be equal to the width of the part of the internal space 20 inside the second portion 42. In the example illustrated in Fig. 6, the two widths are both W.

### Fifth Embodiment

With reference to Fig. 24, an ultrasonic sensor according to a fifth embodiment based on the present invention will be described. Fig. 24 is a cross-sectional view of an ultrasonic sensor 105 according to the present embodiment. The ultrasonic sensor 105 includes the case 4 and one lead wire 16 protruding from the case 4. The piezoelectric vibrating element 7 is mounted on the bottom plate 3 of the case 4. The internal space 20 of the case 4 is divided into three layers. The layer closest to the bottom plate 3 is filled with the filling material 12. The filling material 12 may be, for example, silicone. A sound-absorbing material 15 is disposed in the layer second closest to the bottom plate 3. A substrate 10 is disposed on the surface of the sound-absorbing material 15. The layer farthest from the bottom plate 3 is filled with the filling material 12. The sound-absorbing material 15 may be, for example, either felt or silicone sponge. A part of the lead wire 16 is disposed in the internal space 20 of the case 4, and the other part of the lead wire 16 extends out of the case 4. The lead wire 16 is electrically connected at one end thereof to the substrate 10. The portion of the lead wire 16 connected to the substrate 10 is covered with the filling material 12. The lead wire 16 is provided with a connector 17 at the other end thereof. The lead wire 16 includes at least two wires therein. A first wire on the surface of the substrate 10 is connected to the case 4 by the lead wire 9a, and a second wire on the surface of the substrate 10 is connected to the piezoelectric vibrating element 7 by the lead wire 9b. As in the example illustrated in Fig. 24, the lid 11 may not be provided and the upper surface of the filling material 12 may be directly exposed to the outside. Alternatively, a lid may be disposed to cover the upper surface of the filling material 12.

The present embodiment can achieve advantageous effects similar to those of the first embodiment. With the sound-absorbing material 15 disposed in the internal space 20 as described in the present embodiment, for example, back radiation from the piezoelectric vibrating element 7 can be reduced and a dereverberation effect can be achieved.

Some of the embodiments described above may be appropriately employed in combination.

The embodiments disclosed herein are illustrative, not restrictive, in all aspects. The scope of the present invention is defined by the appended claims.

### Reference Signs List

3 bottom plate, 3a front surface, 4, 4i, 4j case, 7 piezoelectric vibrating element, 8 external terminal, 9a, 9b lead wire, 10 substrate, 11 lid, 12 filling material, 13, 14 stepped portion, 15 sound-absorbing material, 16 lead wire, 17 connector, 19 opening, 20 internal space, 41 first portion, 42 second portion, 45 portion, 51, 52 line, 60 vehicle, 61 main lobe, 62 side lobe, 65 ground, 90 direction (perpendicular to bottom plate), 91 longitudinal direction, 92 width direction, 101, 102, 103, 104, 105 ultrasonic sensor

## Claims

1. An ultrasonic sensor (101) comprising:
a cylindrical case (4) having a bottom plate (3); and
a piezoelectric vibrating element (7) mounted on the bottom plate (3) inside the case (4),
wherein the (4) case has an internal space (20) that is a recess extending downward toward the bottom plate (3);
when viewed in a direction perpendicular to the bottom plate (3), the internal space (20) is of a shape that is longer in one direction than in a direction perpendicular to that direction, having a longitudinal direction (91) parallel to the bottom plate (3);
the case (4) includes
a first portion (41) having a cylindrical shape extending from the bottom plate (3) in the direction perpendicular to the bottom plate (3), the first portion (41) having a first length (D1) being an outside diameter along the longitudinal direction, and
a second portion (42) disposed on a side of the first portion (41) remote from the bottom plate (3), having a cylindrical shape concentric with the first portion (41), and having a second length (D2) being an outside diameter along the longitudinal direction (42), the second length (D2) being greater than the first length (D1); and
a maximum length of a part of the internal space (20) inside the second portion (42) along the longitudinal direction (91) is greater than a maximum length of a part of the internal space inside the first portion (41) along the longitudinal direction (91);
wherein the first portion (41) and the second portion (42) meet at a stepped portion (13), and the vibrating surface of the ultrasonic sensor (101) comprises the bottom plate (3) and a portion (45) comprising part of the outer wall of the first portion (41), and a part of the stepped portion (13) parallel to the bottom plate (3).

2. The ultrasonic sensor according to claim 1, wherein the part of the internal space (20) inside the first portion (41) and the part of the internal space inside the second portion (42) form the stepped portions (13) at respective ends of the internal space in the longitudinal direction (91).

3. The ultrasonic sensor according to claim 1 or 2, wherein when viewed in the direction perpendicular to the bottom plate, a contour of the internal space is curved along a contour of the case at both ends of the internal space in the longitudinal direction.

4. The ultrasonic sensor according to any one of claims 1 to 3, wherein a filling material (12) is disposed to fill at least part of the internal space.

5. The ultrasonic sensor according to any one of claims 1 to 4, wherein when viewed in the direction perpendicular to the bottom plate (3), the internal space (20) has two sides parallel to the longitudinal direction and, between the two sides, the part of the internal space inside the first portion (41) has the same width (W) as the part of the internal space (20) inside the second portion (42) .

## Patentansprüche

1. Ultraschallsensor (101), der Folgendes aufweist:
ein zylindrisches Gehäuse (4) mit einer Bodenplatte (3); und
ein piezoelektrisches Schwingelement (7), das auf der Bodenplatte (3) in dem Gehäuse (4) montiert ist,
wobei das Gehäuse (4) einen Innenraum (20) hat, der eine sich nach unten in Richtung auf die Bodenplatte (3) erstreckende Aussparung ist;
in einer zur Bodenplatte (3) lotrechten Richtung betrachtet, der Innenraum (20) eine Form hat, die in einer Richtung länger als in einer zu dieser Richtung lotrechten Richtung ist, wobei sie eine zur Bodenplatte (3) parallele Längsrichtung (91) hat;
das Gehäuse (4) Folgendes beinhaltet:
einen ersten Abschnitt (41) mit einer zylindrischen Form, die sich von der Bodenplatte (3) in der zur Bodenplatte (3) lotrechten Richtung erstreckt, wobei der erste Abschnitt (41) eine erste Länge (D1) hat, die ein Außendurchmesser entlang der Längsrichtung ist, und
einen zweiten Abschnitt (42), der an einer von der Bodenplatte (3) fernen Seite des ersten Abschnitts (41) angeordnet ist, eine mit dem ersten Abschnitt (41) konzentrische zylindrische Form hat und eine zweite Länge (D2) hat, die ein Außendurchmesser entlang der Längsrichtung (42) ist, wobei die zweite Länge (D2) größer als die erste Länge (D1) ist; und
eine maximale Länge eines Teils des Innenraums (20) in dem zweiten Abschnitt (42) entlang der Längsrichtung (91) größer als eine maximale Länge eines Teils des Innenraums in dem ersten Abschnitt (41) entlang der Längsrichtung (91) ist;
wobei der erste Abschnitt (41) und der zweite Abschnitt (42) an einem abgestuften Abschnitt (13) zusammentreffen und die Schwingfläche des Ultraschallsensors (101) die Bodenplatte (3) und einen Abschnitt (45) aufweist, der Teil der Außenwand des ersten Abschnitts (41) aufweist und einen zur Bodenplatte (3) parallelen Teil des abgestuften Abschnitts (13) aufweist.

2. Ultraschallsensor nach Anspruch 1, wobei der Teil des Innenraums (20) in dem ersten Abschnitt (41) und der Teil des Innenraums in dem zweiten Abschnitt (42) die abgestuften Abschnitte (13) an jeweiligen Enden des Innenraums in der Längsrichtung (91) bilden.

3. Ultraschallsensor nach Anspruch 1 oder 2, wobei, in der zur Bodenplatte lotrechten Richtung betrachtet, eine Kontur des Innenraums entlang einer Kontur des Gehäuses an beiden Enden des Innenraums in der Längsrichtung gekrümmt ist.

4. Ultraschallsensor nach einem der Ansprüche 1 bis 3, wobei ein Füllmaterial (12) zum Füllen wenigstens eines Teils des Innenraums angeordnet ist.

5. Ultraschallsensor nach einem der Ansprüche 1 bis 4, wobei, in der zur Bodenplatte (3) lotrechten Richtung betrachtet, der Innenraum (20) zwei zur Längsrichtung parallele Seiten hat und zwischen den zwei Seiten der Teil des Innenraums in dem ersten Abschnitt (41) die gleiche Breite (W) hat wie der Teil des Innenraums (20) in dem zweiten Abschnitt (42) .

## Revendications

1. Capteur à ultrasons (101) comprenant :
un boîtier cylindrique (4) ayant une plaque de fond (3) ; et
un élément piézoélectrique vibrant (7) monté sur la plaque de fond (3) à l'intérieur du boîtier (4) ;
dans lequel le boîtier (4) a un espace interne (20) qui est un évidement s'étendant vers le bas vers la plaque de fond (3) ;
lorsque vu dans une direction perpendiculaire à la plaque de fond (3), l'espace interne (20) est d'une forme qui est plus longue dans une direction que dans une direction perpendiculaire à cette direction, ayant une direction longitudinale (91) parallèle à la plaque de fond (3) ;
le boîtier (4) comprend
une première partie (41) ayant une forme cylindrique s'étendant de la plaque de fond (3) dans la direction perpendiculaire à la plaque de fond (3), la première partie (41) ayant une première longueur (D1) étant un diamètre extérieur le long de la direction longitudinale, et
une deuxième partie (42) disposée sur un côté de la première partie (41) à distance de la plaque de fond (3), ayant une forme cylindrique concentrique à la première partie (41), et ayant une deuxième longueur (D2) étant un diamètre extérieur le long de la direction longitudinale (42), la deuxième longueur (D2) étant plus grande que la première longueur (D1) ; et
une longueur maximale d'une part de l'espace interne (20) à l'intérieur de la deuxième partie (42) le long de la direction longitudinale (91) est plus grande qu'une longueur maximale d'une part de l'espace interne à l'intérieur de la première partie (41) le long de la direction longitudinale (91) ;
dans lequel la première partie (41) et la deuxième partie (42) se joignent à une partie étagée (13), et la surface vibrante du capteur à ultrasons (101) comprend la plaque de fond (3) et une partie (45) comprenant une part de la paroi externe de la première partie (41), et une part de la partie étagée (13) parallèle à la plaque de fond (3).

2. Capteur à ultrasons selon la revendication 1, dans lequel la part de l'espace interne (20) à l'intérieur de la première partie (41) et la part de l'espace interne à l'intérieur de la deuxième partie (42) forment les parties étagées (13) à des extrémités respectives de l'espace interne dans la direction longitudinale (91).

3. Capteur à ultrasons selon la revendication 1 ou 2, dans lequel lorsque vu dans la direction perpendiculaire à la plaque de fond, un contour de l'espace interne est courbé le long d'un contour du boîtier aux deux extrémités de l'espace interne dans la direction longitudinale.

4. Capteur à ultrasons selon l'une quelconque des revendications 1 à 3, dans lequel un matériau de remplissage (12) est disposé pour remplir au moins une part de l'espace interne.

5. Capteur à ultrasons selon l'une quelconque des revendications 1 à 4, dans lequel lorsque vu dans la direction perpendiculaire à la plaque de fond (3), l'espace interne (20) a deux côtés parallèles à la direction longitudinale et, entre les deux côtés, la part de l'espace interne à l'intérieur de la première partie (41) a la même largeur (W) que la part de l'espace interne (20) à l'intérieur de la deuxième partie (42).
